# EUROPÄISCHE PATENTSCHRIFT

(11) **EP 1 356 969 B1**
(45) Veröffentlichungstag und Bekanntmachung des Hinweises auf die Patenterteilung: **25.07.2007**
(21) Anmeldenummer: 03007482.7
(22) Anmeldetag: 07.04.2003
(51) Int. Cl.: B60J 7/14, B60J 7/20

(54) **Cabriolet-Fahrzeug mit zumindest einen starren rückwärtigen Dachabschluss**
Convertible vehicle with a roof comprising at least a rigid rear end portion
Cabriolet avec toit ayant au moins une partie terminale arrière rigide

(30) Priorität: 23.04.2002 DE 10217915
(43) Veröffentlichungstag der Anmeldung: 29.10.2003
(73) Patentinhaber: Wilhelm Karmann GmbH, 49084 Osnabrück (DE)
(72) Erfinder: Eichholz, Stefan, 49163 Bohmte (DE); Neubrand, Frank, 5563 Edingborough, 48322 Michigan (US)
(74) Vertreter: Busse & Busse Patentanwälte

(56) Entgegenhaltungen:
- EP-A- 0 949 105
- EP-A- 1 092 580
- EP-A- 1 136 295
- US-A- 6 092 335

## Beschreibung

Die Erfindung bezieht sich auf ein Cabriolet- Fahrzeug nach dem Oberbegriff des Patentanspruchs 1.

Bei Cabriolet-Fahrzeugen dieser Art dient die Abdeckung dazu, einen offenen Schacht hinter der letzten Sitzreihe zu vermeiden, um somit einen optisch geschlossenen Eindruck vor dem rückwärtigen Dachabschluß unterhalb des Heckfensters herstellen zu können. Der Durchtrittsspalt ist damit gleichzeitig gegen ein Eingreifen gesichert. Auch ein Verlieren von Teilen, die in den Schacht hineinfallen könnten, ist somit vermieden.

Bei geöffnetem Dach soll der Spalt inklusive dem Bereich, der bei geschlossenem Dach von dem hinteren Dachabschluß eingenommen wird, ebenfalls überdeckt sein, um dann eine geschlossene und insbesondere optisch angenehm wirkende Karosserieabdeckung in diesem Bereich zu erhalten.

Aus der DE 298 12 165.4 U1 ist eine Hutablage bekannt, die sowohl bei geschlossenem als auch bei geöffnetem Dach den Durchtrittsraum für dieses überdeckt und während der Dachbewegung in eine vertikale, innerhalb der Karosserie vor dem hinteren Dachabschluß gehaltene Lage einfahrbar ist. Eine derartige Lösung erfordert einen hohen Aufwand an baulichen Maßnahmen. Zudem muß ein erheblicher Raum zur Aufnahme der Erweiterung in Vertikalstellung innerhalb der Karosserie zur Verfügung stehen.

Aus der EP 1 136 295 A2 ist ein Fahrzeug mit den Merkmalen des Oberbegriffs des Anspruchs 1 bekannt, bei dem an einem hinteren Dachabschlußbügel eine Abdeckung nach Art einer Hutablage angebracht ist, die scheinbar schwenkbar mit diesem Dachabschluß verbunden ist. Die Abdeckung ist mit dem hinteren Dachabschlußbügel verbunden. Der rückwärtige Bügel und die rückwärtige Kante eines Hardtops sind mit der Abdeckung verbunden. Wie sich der Bewegungsablauf der Abdeckung vollzieht, ist dabei allerdings nicht offenbart.

Die EP 1 092 580 A1 offenbart ein Kraftfahrzeug mit einem versenkbaren Dach, wobei jedoch eine Abdeckung nach Art einer Hutablage nicht vorgesehen ist. Die US 6092335 A offenbart ein Cabriolet-Fahrzeug, dessen Kofferraumabdeckung einmal zur Freigabe der Öffnung für Gepäck und einmal zur Freigabe einer Öffnung zum Ablegen des Daches ausgebildet ist. Eine Abdeckung nach Art einer Hutablage ist nicht vorgesehen.

Der Erfindung liegt das Problem zugrunde, ein Cabriolet-Fahrzeug bezüglich der Bewegung der Hutablage zu vereinfachen.

Die Erfindung löst dieses Problem durch ein Cabriolet-Fahrzeug mit den Merkmalen des Anspruchs 1. Vorteilhafte Ausgestaltungen ergeben sich aus den Unteransprüchen 2 bis 7.

Erfindungsgemäß ist erreicht, daß für die Abdeckung kein separater Raum in der Fahrzeugkarosserie, etwa während des Öffnens des Daches, vorgesehen werden muß. Der Antriebs- und Steuerungsaufwand für die Abdeckung kann mit dem Dachablagemechanismus gekoppelt sein. Durch die Anbindung der Abdeckung an das Dach ergibt sich eine Einsparung von Bauteilen. Irgendwelche Gestängeteile, um die Abdeckung an der Karosserie zu halten, sind entbehrlich.

Wenn die Abdeckung bei geöffnetem Dach in eine nahezu parallel zur Erstreckungsebene der Heckscheibe eingeschwenkte Stellung verlagert ist, ergibt sich ein besonders flacher Bauraum für die Abdeckung. Diese kann als eine Zwischenlage im Paket von mehreren Dachteilen raumsparend gehalten sein. Dadurch, daß die Abdeckung sehr flach ausgebildet sein kann, ergibt sich somit keine Gesamtvergrößerung des zusammengelegten Dachpakets.

Ein besonders einfacher Antriebs- und Halterungsmechanismus ergibt sich, wenn die Abdeckung im Bereich des rückwärtigen Dachabschlusses an dem hinteren Dachteil schwenkbar angelenkt ist. Dann kann sich die Bewegung der Abdeckung gegenüber dem hinteren Dachteil auf eine reine Schwenkbewegung ohne eine Überlagerung von mehreren Bewegungen beschränken. Die Gelenke können als reine Schwenkgelenke ausgebildet sein.

Besonders vorteilhaft ist, daß wir in einer ersten Bewegung die Abdeckung in eine Lage überführt wird, in der sich die Abdeckung nahezu parallel zum Heckfenster erstreckt. Die Abdeckung kann mit dichtem Abstand unter dem Heckfenster gehalten werden, so daß der Raumbedarf für die Erweiterung minimiert ist. Danach kann die Erweiterung ohne zusätzliche Bauteile mit der Absenkbewegung des rückwärtigen Dachabschlusses in einen Ablageraum verbracht werden.

Weitere Vorteile und Merkmale der Erfindung ergeben sich aus einem nachfolgend beschriebenen und in der Zeichnung dargestellten Ausführungsbeispiel des Gegenstandes der Erfindung.

In der Zeichnung zeigt:
- Fig. 1: eine schematische Ansicht auf ein erfindungsgemäßes Cabriolet-Fahrzeug in Ausbildung mit drei starren Dachteilen von schräg hinten bei geschlossenem Dach,
- Fig. 2: eine ähnliche Ansicht wie Fig. 1 während einer ersten Phase der Dachöffnung,
- Fig. 3: eine ähnliche Ansicht wie Fig. 2 bei weiter fortschreitender Dachöffnung,
- Fig. 4: eine ähnliche Ansicht wie Fig. 3 nach Bildung eines Pakets aus mehreren Dachteilen und dessen Abwärtsverlagerung in die Karosserie,
- Fig. 5: eine Seitenansicht des vollständig in die Karosserie abgelegten Pakets aus Dachteilen,
- Fig. 6: eine aufgeschnittene Ansicht von schräg oben auf den Heckbereich des Cabriolet-Fahrzeugs bei vollständig abgelegten Dach und darüber geschlossenem Deckelteil.

Das exemplarisch dargestellte Cabriolet-Fahrzeug 1 umfaßt eine Fahrzeugkarosserie 2, die einen Fahrgastinnenraum 3 für vordere und hintere Insassen bietet. Dieser Innenraum 3 ist von einem insgesamt mit 4 bezeichneten Dach abdeckbar. Das Dach 4 ist hier dreiteilig ausgebildet und umfaßt ein insgesamt starres rückwärtiges Dachteil 5, in das eine Heckscheibe 6 eingebettet ist, sowie ein gegenüber dem rückwärtigen Dachteil 5 weiter vorne liegendes mittleres Dachteil 7 und ein vorderstes Dachteil 8, das bei geschlossenem Dach 4 in Kontakt mit einem Windschutzscheibenrahmen steht. Die dreiteilige Dachausbildung ist nicht zwingend. Insbesondere ist beispielsweise bei einem Insassenraum, der nur eine Sitzreihe umfaßt, auch eine zweiteilige Dachausbildung hinreichend. Ebenfalls ist es nicht erforderlich, daß das Dach 4 insgesamt aus festen Dachteilen 5,7,8 besteht. Auch eine teilweise flexible Ausbildung des Daches 4 ist möglich. In jedem Fall ist ein starrer rückwärtiger Dachabschluß 16, der bei einem flexiblen Dach etwa durch einen Spannbügel gebildet sein könnte, vorhanden.

Im Ausführungsbeispiel sind die Dachteile 5,7,8 insgesamt starr ausgebildet, beispielsweise aus einem Kunststoff, einem metallischen Werkstoff, auch einem metallischen Schaumwerkstoff, oder einem anderem geeigneten Material.

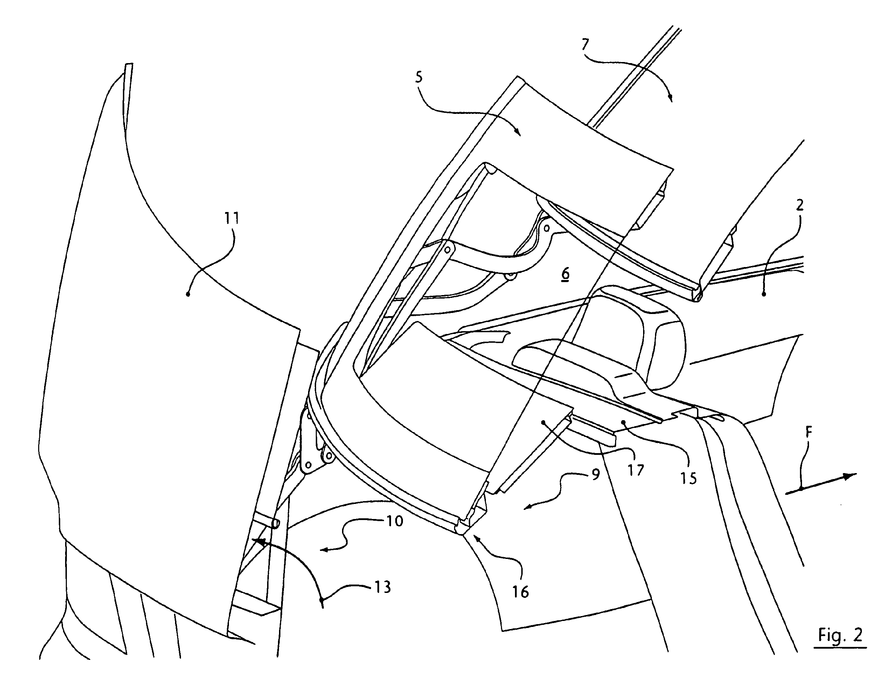

Das Dach 4 ist insgesamt im rückwärtigen Bereich der Karosserie 2 in einem Dachaufnahmeraum 9 ablegbar, der bei geschlossenem Dach 4 als Teil des Kofferraums 10 nutzbar ist. Der Dachaufnahmeraum 9 und der Kofferraum 10 sind insgesamt von einem Deckelteil 11 oberseitig abdeckbar. Dieses ist in einem ersten Öffnungssinn zur Freigabe der Durchtrittsöffnung für das Dach 4 aufschwenkbar (Fig. 2) und in einem zweiten Öffnungssinn zur Freigabe einer Durchtrittsöffnung für Gepäck aufschwenkbar (nicht eingezeichnet).

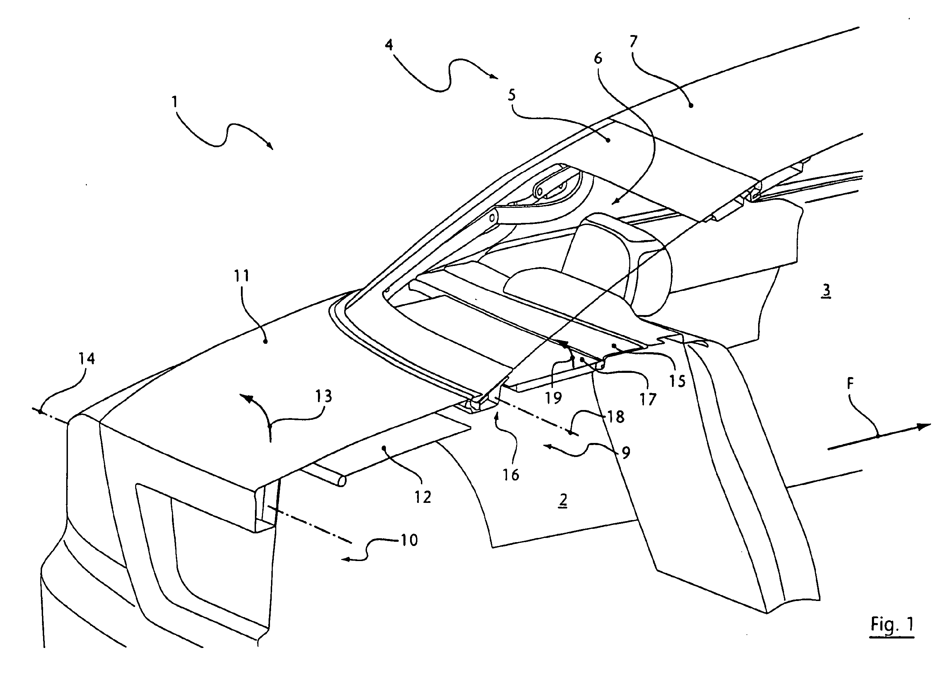

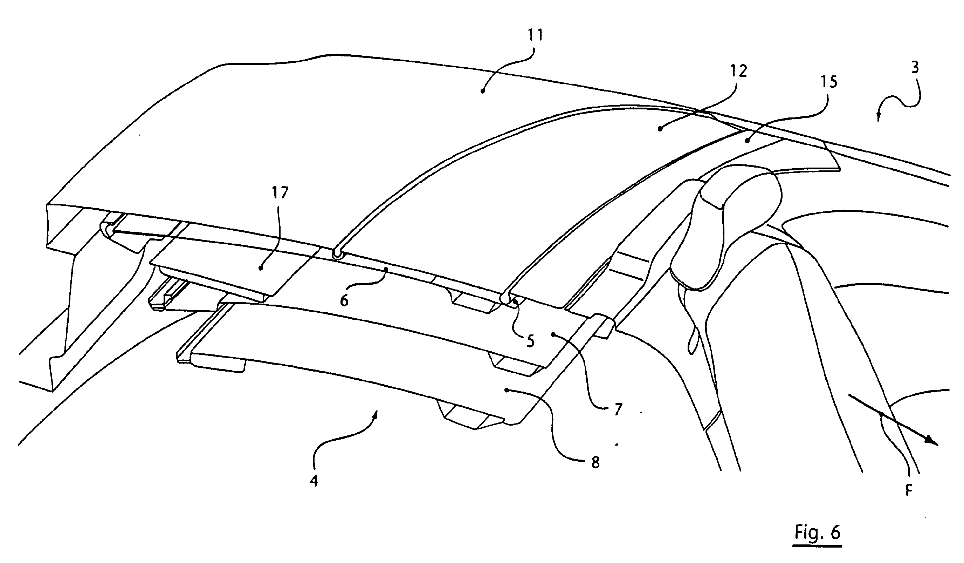

Das Deckelteil 11 umfaßt eine Erweiterung 12, die bei geschlossenem Dach 4 (Fig. 1) unterhalb des Deckelteils 11 gehalten ist und bei geöffnetem Dach (Fig. 6) fluchtend vor diesem gelegen ist.

Hierfür ist die Erweiterung 12 an einem Viergelenk 20,21,22,23 an dem Deckelteil 11 gehalten. Die zugehörigen Lenker 24,25 haben eine hinreichende Länge, um eine erhebliche Längsverlagerung der Erweiterung 12 gegenüber dem Deckelteil 11 während des Ein- und Ausschwenkens bewirken zu können, so daß die beiden Extremlagen gemäß Fig. 1 und Fig. 6 ermöglicht werden.

Bei geschlossenem Dach unterhalb des Heckfensters 6 und vor dem hinteren Dachabschluß 16 ist eine Abdeckung 17 vorgesehen, die im Bereich des hinteren Dachabschlusses 16 schwenkbar an dem hinteren Dachteil 5 angelenkt ist. Diese Abdeckung 17 ist nach Art einer Hutablage ausgebildet und kann beispielsweise textil- oder mit Leder bezogen sein, um somit eine optische und haptische Anpassung an den Innenraum 3 zu erreichen.

Sie ist gegenüber dem hinteren Dachabschluß 16 um eine quer zur Fahrtrichtung F verlaufende Achse 18 einschwenkbar.

Zum Öffnen des Daches wird zunächst das Deckelteil 11 aus der in Fig. 1 gezeigten im wesentlichen horizontalen Lage, in der es bündig in die Außenhaut der Fahrzeugkarosserie 2 eingepaßt ist, um die heckseitige Querachse 14 in Richtung des Pfeils 13 aufgeschwenkt. Im Ausführungsbeispiel ist das Deckelteil 11 an der Achse 14 geteilt, so daß ein Vertikalbereich 11a des Deckelteils 11 bei der genannten Aufschwenkbewegung stehenbleiben kann und lediglich der Horizontalbereich des Deckelteils 11 aufschwenkt. Diese Teilung ist nicht zwingend. Auch eine einteilige Ausbildung des Deckelteils 11 ist möglich.

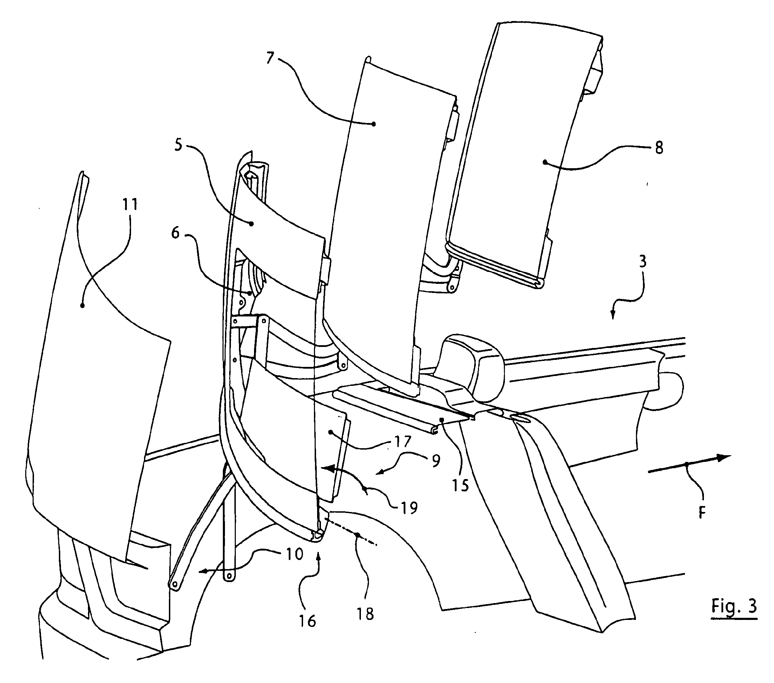

In einer ersten Bewegungsphase der Dachöffnung (Fig. 2, Fig. 3) wird das rückwärtige Dachteil 5 um ein Hauptlager im oberen Karosseriebereich aufgeschwenkt. Mit dem Aufschwenken des hinteren Dachteils 5 ist gleichzeitig ein Aufschwenken der vorderen Dachteile 7 und 8 verbunden, die nicht selbständig an der Karosserie gehalten sind, sondern untereinander und mit dem hinteren Dachteil 5 verbunden sind. Alle drei hier gezeigten Dachteile 5,7,8 werden zueinander in Parallelstellung geschwenkt und somit ineinander verschachtelt, wobei die Dachteile 7,8 mit ihrer äußeren Wölbung jeweils in der inneren Wölbung des weiter hinten liegenden Dachteils 5,7 aufgenommen sind.

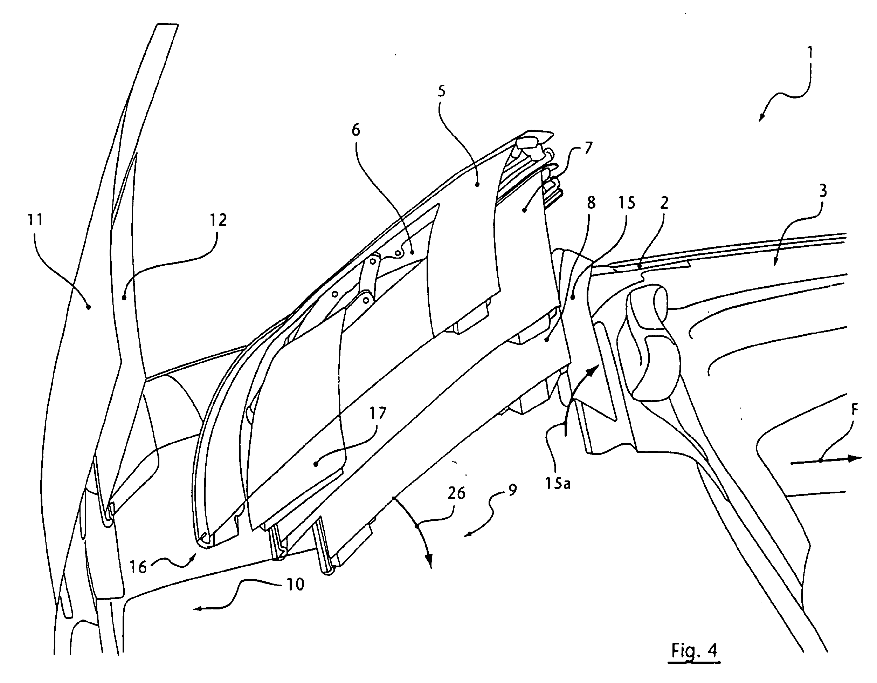

Während dieser ersten Bewegungsphase (Übergang von Fig. 1 zu Fig. 3) schwenkt die Abdeckung 17 in Richtung des Pfeils 19 gegenüber dem hinteren Dachteil 5 um die Achse 18 ein, so daß sich eine nahezu parallele Stellung (Fig. 4) zwischen der Ebene der Heckscheibe 6 und der Erstreckungsebene der Abdeckung 17 ergibt. Die Abdeckung 17 kann dann mit dichtem Abstand unterhalb der Heckscheibe 6 gehalten sein.

Am Ende der ersten Bewegungsphase ist die Abdeckung 17 zwischen dem hinteren Dachteil 5 und dem bei geschlossenem Dach 4 vor diesem liegenden mittleren Dachteil 7 gehalten. In dieser Stellung ist der Raumbedarf der Erweiterung 17 minimiert. Der Abstand zwischen den ineinandergeschachtelten Dachteilen 5,7 kann mit der Abdeckung 17, die entweder starr oder auch zumindest bereichsweise flexibel ausgebildet sein kann, ähnlich oder genauso klein sein wie ohne die Abdeckung 17.

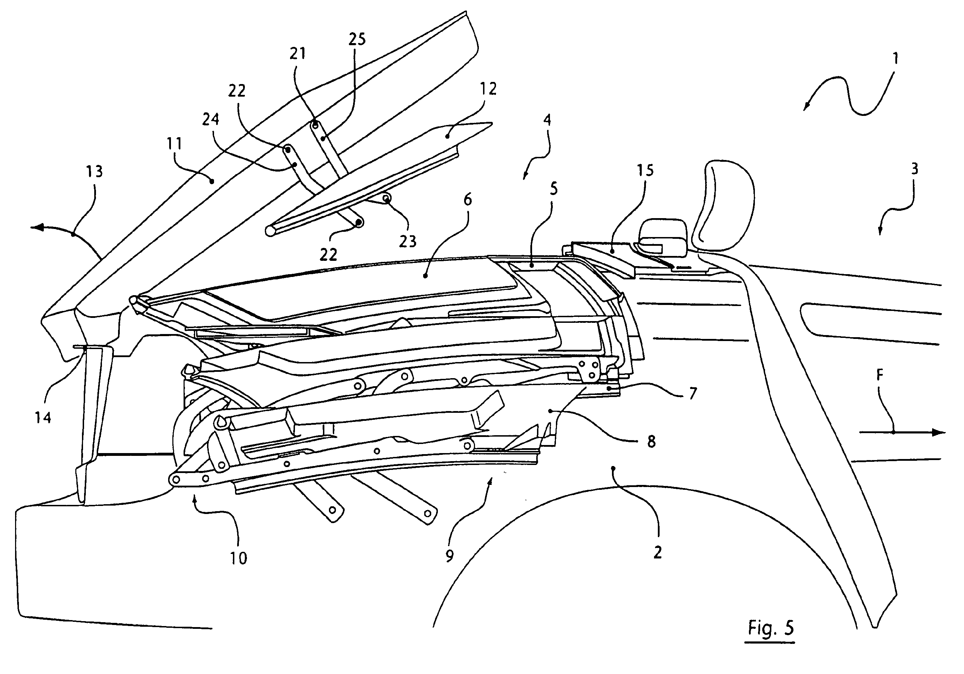

Die ineinander verschachtelten Dachteile können in einer zweiten Bewegungsphase in Richtung des Pfeils 26 in die Karosserie 2 ablegbar sein, so daß sich für diese die in Fig. 5 gezeigte Endstellung ergibt.

Zusätzlich zu der an dem hinteren Dachteil 5 angeordneten Abdeckung 17 kann ein vorderes Abdeckteil 15 vorgesehen sein, das für diese zweite Bewegungsphase der Dachöffnung in Richtung des Pfeils 15a aufschwenkbar sein kann.

Noch während der Dachablage kann das Deckelteil 11 entgegen der Richtung des Pfeils 13 in Schließbewegung abwärts verschwenkt werden, wobei gleichzeitig das Viergelenk 20,21,22,23 öffnet und die Lenker 24,25 in eine nahezu parallel zur Erstreckungsebene des Deckelteils 11 liegende Stellung gelangen, wodurch die Erweiterung 12 fluchtend nach vorne vor das Deckelteil 11 verlagert wird. Insgesamt ist dann bei geschlossener Stellung des Deckelteils 11 (Fig. 6) das abgelegte Dach 4 durch das vordere Abdeckteil 15, die entgegen der Fahrtrichtung F anschließende Erweiterung 12 und das rückwärtig hierzu anschließende Deckelteil 11 abgedeckt. Somit ist eine fluchtende Lage der genannten Teile erreicht, die einen optisch einheitlichen Eindruck bildet. Die Abdeckung 17 bleibt bei dem abgelegten Dach zwischen den Dachteilen 5 und 7 und nahezu parallel zu diesen gehalten.

## Patentansprüche

1. Cabriolet-Fahrzeug mit einem im rückwärtigen Fahrzeugbereich ablegbaren Dach (4), wobei das Dach (4) zumindest einen starren rückwärtigen Dachabschluß (16) umfaßt und wobei ein Durchtrittsspalt für die Bewegung des Daches (4), der bei geschlossenem Dach (4) vor dem hinteren Dachabschluß (16) und unterhalb eines Heckfensters (6) liegt, zumindest teilweise durch eine an dem Dach (4) im Bereich des rückwärtigen Dachabschlusses (16) angeordnete und mit dem Dach (4) bewegliche Abdeckung (17) nach Art einer Hutablage abdeckbar ist, wobei die Abdeckung (17) am rückwärtigen Dachabschluß (16), den die untere hintere Kante eines rückwärtigen Dachteils (5) bildet, schwenkbar angelenkt ist und die Abdeckung (17) bei geöffnetem Dach (4) in eine nahezu parallel zur Erstreckungsebene des Heckfensters (6) eingeschwenkte Stellung verlagert ist, **dadurch gekennzeichnet, daß** das Fahrzeug (1) zumindest ein starres rückwärtiges Dachteil (5) umfaßt, dem ein oder mehrere Dachteile (7;8) vorgeordnet sind, wobei in einer ersten Bewegungsphase der Dachöffnung die Abdeckung (17) in Parallelstellung zur Heckscheibe (6) verlagerbar ist und im Weiteren die Abdeckung (17) zwischen dem rückwärtigen Dachteil (5) und dem bei geschlossenem Dach in Fahrtrichtung vor diesem gehaltenen Dachteil (7) gelegen ist.

2. Cabriolet-Fahrzeug nach Anspruch 1, **dadurch gekennzeichnet, daß** nach einer ersten Bewegungsphase der Dachöffnung, in der die Abdeckung (17) in Parallelstellung zur Heckscheibe (6) verlagerbar ist und im weiteren das oder die Dachteil(e) (7;8), die bei geschlossenem Dach (4) dem rückwärtigen Dachteil (5) vorgelagert sind, sich in die Wölbung des rückwärtigen Dachteils (5) legen.

3. Cabriolet-Fahrzeug nach Anspruch 2, **dadurch gekennzeichnet, daß** die Dachteile (5;7;8) am Ende der ersten Bewegungsphase in einer gegenüber der Vertikalen nur wenig geneigten Stellung gehalten sind und das so gebildete Paket aus Dachteilen (5;7;8) insgesamt in eine horizontale Lage in die Kraftfahrzeugkarosserie (2) absenkbar ist.

4. Cabriolet-Fahrzeug nach Anspruch 3, **dadurch gekennzeichnet, daß** der Fahrzeugkarosserie (2) ein Deckelteil (11) zugeordnet ist, das in einem ersten Öffnungssinn zur Freigabe einer Durchtrittsöffnung für das Dach (4) und in einem zweiten Öffnungssinn zur Freigabe einer Durchtrittsöffnung für Gepäck geöffnet werden kann.

5. Cabriolet-Fahrzeug nach Anspruch 4, **dadurch gekennzeichnet, daß** dem Deckelteil (11) eine ausfahrbare Erweiterung (12) zugeordnet ist, die bei geschlossener Stellung des Deckelteils (11) oberhalb des abgelegten Dachs (4) in Fahrtrichtung fluchtend vor dem Bereich des Deckelteils, gegenüber dem sie ausfahrbar ist, liegt.

6. Cabriolet-Fahrzeug nach Anspruch 4 oder 5, **dadurch gekennzeichnet, daß** die Erweiterung (12) bei geöffnetem Dach (4) karosserieoberseitig den Spalt abdeckt, der bei geschlossenem Dach (4) von der beweglichen Abdeckung (17) überdeckt ist.

7. Cabriolet-Fahrzeug nach einem der vorangehenden Ansprüche, **dadurch gekennzeichnet, daß** die Abdeckung (17) bei geschlossenem Dach (4) in einer nahezu horizontalen und gegenüber der Erstreckungsebene des Heckfensters (6) abgewinkelten Lage gehalten ist.

## Claims

1. Convertible vehicle having a roof (4) able to be stowed in the rear part of the vehicle, the roof (4) comprising at least one, rigid, rear roof-terminating portion (16), and there being a gap for the roof (4) to pass through as it moves which is situated, when the roof (4) is raised, in front of the rear roof-terminating portion (16) and below a rear window (6) and which can be at least partly covered by a cover (17), similar to a rear parcel-shelf, which is arranged on the roof (4) in the region of the rear roof-terminating portion (16) and which is movable with the roof (4), the cover (17) being pivotably articulated to the rear roof-terminating portion (16), which latter forms the bottom rear edge of a rear roof-part (5) and, when the roof (4) is lowered, the cover (17) being displaced to a position in which it is pivoted-in almost parallel to the plane in which the rear window (6) extends, **characterised in that** the vehicle (1) comprises at least one rigid rear roof-part (5) in front of which are arranged one or more roof-parts (7, 8), the cover (17) being displaceable, in a first phase of movement in the lowering of the roof, to a position in which it is parallel to the rear window (6) and the cover (17) also being situated, in a first phase of movement in the lowering of the roof, between the rear roof-part (5) and that roof-part (7) which, when the roof is raised, is held in front of the said rear roof-part (5) in the direction of travel.

2. Convertible vehicle according to claim 1, **characterised in that**, after a first phase of movement in the lowering of the roof, in which the cover (17) is displaceable to a position parallel to the rear window (6), and the roof-part or parts (7, 8) which are arranged in front of the rear roof-part (5) when the roof (4) is raised also place themselves in the curve of the rear roof-part (5).

3. Convertible vehicle according to claim 2, **characterised in that**, at the end of the first phase of movement, the roof-parts (5, 7, 8) are held in a position in which they are tilted only slightly from the vertical, and the pack of roof-parts (5, 7, 8) which is formed in this way can be lowered as a whole into the bodywork (2) of the vehicle to a horizontal position.

4. Convertible vehicle according to claim 3, **characterised in that** the bodywork (2) of the vehicle has associated with it a lid part (11) which, in a first direction of opening, can be opened to open up an opening for the roof (4) to pass through and, in a second direction of opening, can be opened to open up an opening for luggage to pass through.

5. Convertible vehicle according to claim 4, **characterised in that** the lid part (11) has associated with it an extendable extension (12) which, when the lid part (11) is in the closed position, is situated above the stowed roof (4) and in front of and in line with, in the direction of travel, that region of the lid part relative to which it can be extended.

6. Convertible vehicle according to claim 4 or 5, **characterised in that**, when the roof (4) is lowered, the extension (12) covers, at the top of the bodywork, the gap which was covered by the movable cover (17) when the roof (4) was raised.

7. Convertible vehicle according to one of the foregoing claims, **characterised in that**, when the roof (4) is raised, the cover (17) is held in an almost horizontal position in which it is at an angle to the plane in which the rear window (6) extends.

## Revendications

1. Véhicule cabriolet comportant un toit (4) qui peut être déposé dans la zone arrière du véhicule, le toit (4) comprenant une bordure de toit (16) rigide arrière et une fente de passage pour le mouvement du toit (4) qui, lorsque le toit (4) est fermé, se situe devant la bordure de toit (16) arrière et en-dessous d'une lunette arrière (6) et peut être recouverte au moins partiellement par une couverture (17) de type vide-poches disposée sur le toit (4) dans la zone de la bordure de toit (16) arrière et mobile avec le toit (4), la couverture (17) étant articulée de façon pivotante sur la bordure de toit (16) arrière formée par l'arête arrière inférieure d'une partie de toit arrière (5), alors que lorsque le toit (4) est ouvert, la couverture (17) est déplacée dans une position sensiblement parallèle au plan longitudinal de la lunette arrière (6),
**caractérisé en ce que**
le véhicule (1) comprend au moins une partie de toit (5) rigide arrière précédée d'une ou de plusieurs parties de toit (7 ; 8), et dans une première phase de mouvement d'ouverture du toit la couverture (17) peut être déplacée dans une position parallèle à la lunette arrière (6), alors que quand le toit est fermé, la couverture (17) se situe en outre entre la partie de toit (5) arrière et la partie de toit (7) située devant celle-ci dans la direction de conduite.

2. Véhicule cabriolet selon la revendication 1,
**caractérisé en ce qu'**
après une première phase de mouvement d'ouverture du toit, dans laquelle la couverture (17) est déplaçable parallèlement à la lunette arrière (6), la ou les parties de toit (7 ; 8) sont en outre placées devant la partie de toit (5) arrière lorsque le toit (4) est fermé et se posent dans la courbure de la partie de toit (5) arrière.

3. Véhicule cabriolet selon la revendication 2,
**caractérisé en ce qu'**
à la fin de la première phase de mouvement, les parties de toit (5 ; 7 ; 8) sont maintenues dans une position légèrement inclinée par rapport à la verticale, et le paquet de parties de toit (5 ; 7 ; 8) ainsi formé peut être abaissé dans une position horizontale dans la carrosserie du véhicule (2).

4. Véhicule cabriolet selon la revendication 3,
**caractérisé en ce qu'**
un couvercle (11) associé à la carrosserie du véhicule (2) peut être ouvert dans une première direction d'ouverture pour dégager une ouverture de passage pour le toit (4) et dans une deuxième direction d'ouverture pour dégager une ouverture de passage pour des bagages.

5. Véhicule cabriolet selon la revendication 4,
**caractérisé en ce qu'**
un prolongement (12) extensible est associé au couvercle (11) et, dans la position fermée du couvercle (11), se situe au-dessus du toit (4) déposé de façon alignée dans la direction de conduite devant la zone du couvercle par rapport à laquelle il est extensible.

6. Véhicule cabriolet selon la revendication 4 ou 5,
**caractérisé en ce que**
lorsque le toit (4) est ouvert, le prolongement (12) recouvre la fente qui, en haut de la carrosserie, est recouverte par la couverture (17) mobile lorsque le toit (4) est fermé.

7. Véhicule cabriolet selon l'une quelconque des revendications précédentes,
**caractérisé en ce que**
la couverture (17) est maintenue dans une position sensiblement horizontale et inclinée par rapport au plan longitudinal de la lunette arrière (6) lorsque le toit (4) est fermé.
